Europäisches Patentamt

European Patent Office

Office européen des brevets

(11) Publication number: **0 356 054**
**A2**

## EUROPEAN PATENT APPLICATION

(21) Application number: **89307987.1**

(22) Date of filing: **04.08.89**

(51) Int. Cl.⁴: **C08J 7/04 , C09D 183/05**

(30) Priority: **17.08.88 GB 8819568**

(43) Date of publication of application:
**28.02.90 Bulletin 90/09**

(84) Designated Contracting States:
**AT BE DE ES FR GB IT LU NL SE**

(71) Applicant: **Dow Corning Limited**
**Inveresk House 1 Aldwych**
**London WC2R 0HF(GB)**

(72) Inventor: **Piscitelli, Libero**
**Chemin des Deux Maisons 73 - Boîte 9**
**B-1200 Brussels(BE)**
Inventor: **Thomas, David Randall**
**14 St. Brannocks Close - Barry**
**South Glamorgan - Wales(GB)**

(74) Representative: **Walbeoff, William John**
**Dow Corning Limited Cardiff Road Barry**
**South Glamorgan CF6 7YL Wales(GB)**

(54) **A method of coating flexible polyester film.**

(57) Flexible polyester film is coated with a silicone release coating by applying and curing a solventless composition which comprises a polydiorganosiloxane having solely in its terminal units hydroxyl or alkenyl groups, an organohydrogen siloxane crosslinker and a catalyst which is preferably a Pt compound. The ratio of SiH groups over the hydroxyl or alkenyl groups is at least 2/1. The release coating adheres well to the polyester film without the need to pretreat the film with electron beam irradiation.

EP 0 356 054 A2

## A METHOD OF COATING FLEXIBLE POLYESTER FILM

This invention relates to a method of coating flexible polyester film and more specifically to a method of applying a silicone release coating to polyester film.

Silicone release liners are used e.g. as backing for providing self-adhesive labels which may be readily peeled therefrom when required for use. Traditionally such liners have consisted of a paper substrate to which has been applied a silicone release coating. More recently it has been proposed to use polyester (e.g. polyethylene terephthalate) film as a substrate for release liners. Although silicone release coatings, which are traditionally used on paper substrates, adhere well initially on polyester substrates their adhesion deteriorates with time. This is particularly true for those silicone release coating compositions which are applied in the solventless state. Such compositions are, however, preferred as the absence of solvents overcomes environmental concerns, no solvent recovery step is required and they tend to have better release properties when in contact with certain types of the more aggressive adhesives.

In U.S. 4 533 566 a solution to the problem of poor adhesion to polyester substrates is proposed, which involves pretreating the uncoated polyester film in an inert atmosphere containing less than 500 ppm oxygen while exposing the film to irradiation of an electron beam before applying the silicone release coating.

Such an extra step renders the coating operation more expensive, both in respect of process time and of equipment required. There is thus a need for a method of coating polyester film with a silicone release coating which will ensure good adhesion of the coating to the film substrate for a longer time and without requiring expensive equipment.

We have now found that if certain silicone compositions are used satisfactory adhesion to polyester film can be achieved without the need for electron beam irradiation pretreatment.

This invention accordingly provides a method of coating a flexible polyester film comprising (A), applying to the film a solventless composition which comprises (1) a polydiorganosiloxane having units of the general formula $R_2SiO$ and terminal units of the general formula $R_aR'_{3-a}SiO_{\frac{1}{2}}$, wherein each R represents an alkyl or aryl group having from 1 to 8 carbon atoms, each $R'$ represents a hydroxyl group or an alkenyl group having up to 8 carbon atoms and wherein the olefinic unsaturation is in the terminal position and a has a value of 0, 1 or 2, (2) an organohydrogen siloxane crosslinker having at least 3 silicon-bonded hydrogen atoms per molecule and (3) sufficient of a catalyst for catalysing the reaction between SiH groups and the $SiR'$ groups, the ratio of SiH groups provided by (2) over $SiR'$ groups provided by (1) being at least 2/1 and (B) allowing the composition to cure, said method excluding subjecting the uncoated polyester film in an inert atmosphere to electron beam irradiation prior to step (A).

In the method of the invention the composition which is applied to the polyester film comprises a substantially linear polydiorganosiloxane (1). The polydiorganosiloxane may vary in viscosity from mobile liquids to gum type materials. The viscosity of polydiorganosiloxane (1) is preferably in the range from 100 to 100,000 $mm^2/s$, most preferably from 200 to 10,000 $mm^2/s$. The R substituent may be an alkyl or aryl group having from 1 to 8 carbon atoms. These substituents are for example ethyl, isopropyl, butyl, hexyl or phenyl. Preferably, however, at least 80% of the substituents R are methyl groups. The group $R'$ may be hydroxyl or an alkenyl group having up to 8 carbon atoms. The latter include vinyl, allyl and hexenyl groups. It is important that the unsaturated bond is located between the 2 carbon atoms at the free end of the alkenyl group to give efficient cure. The polydiorganosiloxanes (1) must have at least one $R'$ group in each of the terminal units of the polymer. No $R'$ groups may be present in other units of the polymer chain. Preferably only one $R'$ group is present in each terminal unit, a having the value of 2.

The organohydrogen siloxane crosslinker (2) is a siloxane polymer having at least 3 silicon-bonded hydrogen atoms per molecule. These hydrogen atoms may be present in terminal units, in the chain units of the siloxane polymer or in both types of units. The other silicon-bonded organic substituents may be any monovalent hydrocarbon group but are preferably alkyl or aryl groups. Preferably at least 80% of these other substituents are methyl groups. The crosslinker (2) may have a viscosity which ranges from 50 to 5000 $mm^2/s$ but is preferably not higher than 1000 $mm^2/s$.

The catalyst (3) is a group VIII metal or a compound or complex thereof, preferably a Pt containing compound or complex. Examples of the preferred catalyst are chloroplatinic acid, platinum acetyl acetonate, complexes of platinous halides with unsaturated compounds such as ethylene, propylene, organovinylsiloxane and styrene, hexamethyldiplatinum and $Pt(CN)_3$. The catalyst may be used in an amount up to 0.1 part by weight of the group VIII metal per 100 parts of the polydiorganosiloxane (1), but it is in general preferred to use from 0.001 to 0.05 part per 100 parts of the polydiorganosiloxane.

In order to obtain sufficient adhesion of the coating to a polyester substrate it is necessary to provide sufficient of organohydrogen siloxane crosslinker (2) to ensure a ratio of silicon-bonded hydrogen atoms provided by the crosslinker (2) to Si-R' groups provided by polydiorganosiloxane (1) of at least 2/1. It is preferred to provide a composition in which said ratio is at least 3/1. The ratio may be as high as 25/1.

The composition used in step (A) may contain in addition to (1), (2) and (3) optional ingredients employed in silicone release compositions, for example inhibitors for increasing the bath life of the composition, and additives for modifying the release properties of the cured coating. Examples of suitable inhibitors are shown for example in G. B. Patent Specifications 1 540 760, 2 045 789 and 2 048 915. Other ingredients include silicone copolymers having units of the average formula $SiO_2$ and $R_3SiO_{\frac{1}{2}}$ and $R_2R'SiO_{\frac{1}{2}}$, wherein R and R' are as defined above.

The composition may be applied employing any of the known techniques for coating substrates. Such techniques include a time life coating system. The thickness of the applied coating is dependent on the speed of the coating process, the pressure on the roll etc. Preferably the coating conditions are adjusted to give a pick up of 0.5 to 5 grams of composition per square metre of surface of the polyester substrate. Following application of the composition the coated film is subjected to elevated temperature to allow the composition to cure. Exposure of the coated film to a temperature of from 100 to 180°C for 5 to 50 seconds is usually sufficient to give a satisfactory cure, although exposure for longer periods at lower temperatures is also acceptable.

When a polyester film is coated according to the invention, a release liner is obtained which has a resistance to rub-off which is superior to that of liners coated according to the methods of the prior art and which have not been pretreated by subjection to electron beam irradiation.

In the following examples in which Me denotes a methyl group, He a hexenyl group, Vi a vinyl group and in which all parts and percentages are by weight the invention is illustrated.

## Examples 1 - 14

Compositions 1-9 were prepared by mixing 100 parts of a polydimethylsiloxane (A) having terminal units of the formula $Me_2R'SiO_{\frac{1}{2}}$, with x parts of a mixture consisting of 75% of a methylhydrogenpolysiloxane, 20% of a copolymer of methylhydrogenpolysiloxane and dimethylsiloxane units, and 5% of a bath life extender having the formula

$$HC\equiv C-\underset{\underset{OH}{|}}{C}(Me)-CH_2-CH(Me)-Me$$

R', the viscosity of polydimethylsiloxane (A) and the value of x being specified in Table 1. Comparative compositions (Examples 10 - 14) were also prepared using instead of polymer (A) a copolymer (A') (Examples 10, 11 and 13) of methylvinylsiloxane and vinyldimethyl endblocking units or (A") (Examples 12 and 14) of dimethylsiloxane, methylhexenylsiloxane and hexenyldimethyl-endblocking units. Values for the nonmethyl group, viscosity and x are also given in Table 1.

The compositions were coated onto 3mm Melinex A (Poly ethylene terephthalate supplied by ICI) using a time-life coater which provided a coating thickness of about 1 micron. The polyester films were then subjected to 150°C for 120 seconds (30 seconds at 130°C for examples 3 and 6) to ensure complete cure. After storage of the cured release liners, they were tested at regular intervals for resistance to rub-off. This was done by rubbing the coating with a finger and assessing the adhesion of the coating. The results of all tests are summarised in Table II.

TABLE I

| Example | R' | Viscosity A (mm²/s) | Ratio SiH/SiR' | x |
|---------|-----|---------------------|----------------|------|
| 1 | OH | 5000 | 8.7 | 3.0 |
| 2 | OH | 5000 | 17.4 | 6.0 |
| 3 | OH | 2000 | 14.5 | 6.0 |
| 4 | OH | 2000 | 9.7 | 4.0 |
| 5 | OH | 2000 | 24.2 | 10.0 |
| 6 | Vi | 450 | 6.44 | 6.0 |
| 7 | Vi | 2000 | 14.6 | 6.0 |
| 8 | Vi | 2000 | 24.4 | 10.0 |
| 9 | He | - | 6.0 | 6.0 |
| 10 | Vi | 300 | 1.28 | 5.0 |
| 11 | Vi | 300 | 2.56 | 10.0 |
| 12 | He | - | 2.5 | 6.0 |
| 13 | Vi | 300 | 5.7 | 20.0 |
| 14 | He | - | 3.3 | 8.0 |

TABLE II

| Example | Time of test (days) | Rub-off |
|---------|---------------------|---------|
| 1 | 1 | NO |
| 2 | 30 | NO |
| 3 | 40 | NO |
| 4 | 1 | NO |
| 5 | 20 | NO |
| 6 | 40 | NO |
| 7 | 40 | NO |
| 8 | 5 | NO |
| 9 | 30 | NO |
| 10 | 1 | YES |
| 11 | 3 | YES |
| 12 | 6 | YES |
| 13 | - | YES |
| 14 | - | YES |

It can be seen from the results that the use of polydiorganosiloxanes where R' is pendant in the chain does not give resistance to rub-off when coated and cured on polyester film.

## Claims

1. A method of coating a flexible polyester film comprising (A), applying to the film a solventless composition which comprises (1) a polydiorganosiloxane having units of the general formula $R_2SiO$ and terminal units of the general formula $R_aR'_{3-a}SiO_{\frac{1}{2}}$, wherein each R represents an alkyl or aryl group having from 1 to 8 carbon atoms, each R' represents a hydroxyl group or an alkenyl group having up to 8 carbon atoms wherein the olefinic unsaturation is in the terminal position and a has a value of 0, 1 or 2, (2) an organohydrogen siloxane crosslinker having at least 3 silicon-bonded hydrogen atoms per molecule and (3) sufficient of a catalyst for catalysing the reaction between SiH groups and the SiR' groups, the ratio of SiH groups provided by (2) over SiR' groups provided by (1) being at least 2/1 and (B) allowing the composition to cure, said method excluding subjecting the uncoated polyester film in an inert atmosphere to electron beam irradiation prior to step (A).

2. A method according to Claim 1 wherein in the solventless composition the ratio of SiH groups provided by (2) over SiR' groups provided by (1) is at least 3/1.

3. A method according to either one of Claims 1 or 2 wherein the catalyst (3) is a Pt containing compound.

4. A method according to Claim 3 wherein the Pt in (3) used in ratio 0.001 to 0.05 part by weight per 100 parts by weight of polydiorganosiloxane.

5. A method according to any one of the preceding claims wherein polydiorganosiloxane (1) has a viscosity from 200 to 10,000 mm$^2$/s.

6. A method according to any one of the preceding claims wherein in polydiorganosiloxane (1) $\underline{a}$ has a value of 2.

7. A method according to any one of the preceding claims wherein at least 80% of R groups in polydiorganosiloxane (1) and of the organic substituents in organohydrogen crosslinker (2) are methyl groups.

8. A method according to any one of the preceding claims wherein the organohydrogen crosslinker (2) has a viscosity which is not higher than 1000 mm$^2$/s.

9. A method according to any one of the preceding claims in which the amount of composition applied results in a pick-up of 0.5 to 5g per m$^2$ of flexible polyester film.

10. Flexible polyester film having a silicone release coating which has been applied as a solventless composition without first having subjected the uncoated polyester film in an inert atmosphere to electron beam irradiation.